# EUROPÄISCHE PATENTSCHRIFT

(11) **EP 3 539 908 B1**
(45) Veröffentlichungstag und Bekanntmachung des Hinweises auf die Patenterteilung: **29.12.2021**
(21) Anmeldenummer: 19162437.8
(22) Anmeldetag: 13.03.2019
(51) Int. Cl.: B65G 21/06, B65G 23/44

(54) **TRANSPORTVORRICHTUNG MIT VERRIEGELUNGSMECHANISMUS**
TRANSPORT DEVICE WITH LOCKING MECHANISM
DISPOSITIF DE TRANSPORT À MÉCANISME DE VERROUILLAGE

(30) Priorität: 16.03.2018 DE 102018204043
(43) Veröffentlichungstag der Anmeldung: 18.09.2019
(73) Patentinhaber: MULTIVAC Sepp Haggenmüller SE & Co. KG, 87787 Wolfertschwenden (DE)
(72) Erfinder: SAUTER, Sebastian, 87739 Breitenbrunn (DE)
(74) Vertreter: Grünecker Patent- und Rechtsanwälte PartG mbB

(56) Entgegenhaltungen:
- EP-A2- 3 202 671
- WO-A1-2014/184335
- JP-A- H06 219 527
- US-A1- 2006 151 294
- US-A1- 2016 167 884
- US-B1- 6 523 679

## Beschreibung

Die Erfindung bezieht sich auf eine Transportvorrichtung. Solche Transportvorrichtungen sind aus der Praxis bekannt und werden beispielsweise in Kombination mit Verpackungsmaschinen, wie sie zum Beispiel aus der EP 3 202 671 A2 bekannt sind, eingesetzt werden. Dort können die Transportvorrichtungen dazu genutzt werden, Produkte, insbesondere Lebensmittel bzw. Lebensmittelportionen in Verpackungsmulden einzulegen.

Wesentliche Einflussfaktoren für die Effizienz von solchen Transportvorrichtungen sind der Aufwand und die Zeit, die für die regelmäßig durchzuführende Reinigung sämtlicher Komponenten benötigt werden, insbesondere derer, die mit den zu verpackenden Produkten in Berührung kommen. Um Förderbänder der Transportvorrichtung reinigen zu können, werden diese in der Regel aus der Transportvorrichtung entfernt. Dazu muss zunächst die Bandspannung reduziert werden, um das jeweilige Förderband von den Führungsrollen abziehen zu können.

Bei der erfindungsgemäßen Transportvorrichtung , welche im Anspruch 1 offenbart wird, wird diese Aufgabe durch einen schwenkbaren Träger gelöst, der das Produkteinlegeband führt und mindestens zwischen einer ersten Schwenkposition und einer zweiten Schwenkposition, in der die Bandspannung höher ist als in der ersten Schwenkposition, schwenkbar ist.

Aus der US 2006 0 151 294 A1, die eine Transportvorrichtung nach dem Oberbegriff des Anspruchs 1 offenbart, ist ein Förderer bekannt, der eine Klappbaugruppe umfasst, die in einer eingeklappten Stellung eine Bandspannung reduziert. Ein Teil der Klappbaugruppe kann ohne weiteres Werkzeug von dem Förderer abmontiert werden. Allerdings werden zum Befestigen in Bohrungen eingesetzte Stifte benutzt, die zum Demontieren entfernt werden müssen. Beim Reinigen des Förderers können diese Stifte leicht verloren gehen. Außerdem können die Bohrungen die Reinigung erschweren.

Eine weitere Aufgabe der Erfindung ist es, die Effizienz des Reinigungsprozesses, insbesondere mit Bezug auf die Förderbänder und deren Träger, weiter zu verbessern.

Diese Aufgabe wird erfindungsgemäß gelöst durch eine Transportvorrichtung mit den Merkmalen des Anspruchs 1. Vorteilhafte Weiterbildungen sind in den abhängigen Ansprüchen angegeben.

Die erfindungsgemäße Transportvorrichtung umfasst ein Förderband, das durch einen schwenkbaren Träger geführt wird, wobei eine Bandspannung des Produkteinlegebands niedriger ist, wenn der schwenkbare Träger in einer ersten Schwenkposition angeordnet ist, als wenn er in einer zweiten Schwenkposition angeordnet ist. Außerdem umfasst die Transportvorrichtung einen Verriegelungsmechanismus, durch den der schwenkbare Träger an einer Befestigungskomponente der Transportvorrichtung schwenkbar befestigt ist, wobei der Verriegelungsmechanismus für eine werkzeuglose Entnahme des schwenkbaren Trägers aus der Transportvorrichtung konfiguriert ist.

Als Befestigungskomponente der Transportvorrichtung kann jegliche Struktur der Transportvorrichtung verstanden werden, die sich für eine Montage des schwenkbaren Trägers eignet, beispielsweise ein Maschinenrahmen oder -gestell bzw. ein Teil davon oder aber verschiedene Verkleidungsteile.

Dadurch, dass die Bandspannung des Produkteinlegebands durch das Schwenken des schwenkbaren Trägers in die erste Schwenkposition reduziert werden kann, kann das Abnehmen des Produkteinlegebands von dem Träger erleichtert werden. Die Schwenkachse, um die der Träger schwenkbar ist, kann dabei insbesondere quer, vorzugsweise rechtwinklig, zu einer Transportrichtung verlaufen. Durch den Verriegelungsmechanismus kann einerseits eine Entnahme des schwenkbaren Trägers ermöglicht werden, wodurch eine gründlichere Reinigung zum einen des Trägers selbst sowie zum Anderen von gegebenenfalls durch ihn im eingebauten Zustand schwieriger erreichbaren Teilen ermöglicht werden kann. Andererseits kann durch die werkzeuglose Entnahme des schwenkbaren Trägers die Effizienz des Reinigungsprozesses verbessert werden.

Der Verriegelungsmechanismus umfasst einen fest, insbesondere rotationsfest, mit der Befestigungskomponente verbundenen Bolzen und eine Manschette, die rotationssicher auf den Bolzen aufschiebbar ist, wobei die Manschette drehbar in einer Öffnung des schwenkbaren Trägers lagerbar ist. Als Bolzen können Strukturen verstanden werden, die sich von einer Oberfläche der Befestigungskomponente aus in eine Richtung erstrecken. Diese Richtung kann vorzugsweise parallel zu der Schwenkachse verlaufen, um die der Träger schwenkbar ist. Als Manschette kann ein Bauteil verstanden werden, das an mindestens einer Oberfläche des Bolzens anliegt, insbesondere kann es sich dabei um ein den Bolzen mindestens teilweise umschließendes Bauteil handeln. Durch die drehbare Lagerung der Manschette in der Öffnung des schwenkbaren Trägers sowie deren rotationssicheren Sitz auf dem Bolzen kann die Verriegelungsfunktion des Verriegelungsmechanismus realisiert werden.

Es ist vorstellbar, dass der schwenkbare Träger einen ersten Kanal aufweist, der mit der Öffnung verbunden ist, wobei der erste Kanal für ein Hindurchführen des Bolzens durch ihn hindurch zu der Öffnung dimensioniert ist. Der erste Kanal kann dabei zwischen der Öffnung und einer Randfläche des Trägers verlaufen, sodass der Bolzen in einer Richtung, die senkrecht zu dieser Randfläche verläuft, von außen in den Kanal eingeführt werden kann.

Des Weiteren ist es vorstellbar, dass die Manschette einen zweiten Kanal aufweist, der für ein Hindurchführen des Bolzens durch ihn hindurch dimensioniert ist. Der erste und der zweite Kanal können ein Aufschieben des Trägers auf den Bolzen, und somit eine besonders einfache Art der Entnahme bzw. des Aufsetzens ermöglichen.

In einer besonders günstigen Variante können der erste Kanal und der zweite Kanal in einer ersten Rotationsposition der Manschette relativ zu dem schwenkbaren Träger deckungsgleich zueinander ausgerichtet sein, wodurch der Bolzen gleichzeitig durch beide Kanäle hindurch führbar ist.

Es ist vorteilhaft, wenn die Manschette in der ersten Rotationsposition angeordnet ist, wenn der schwenkbare Träger in der ersten Schwenkposition angeordnet ist. Die erste Schwenkposition kann vorzugsweise zwischen 30° und 60°, bevorzugt zwischen 40° und 50°, besonders bevorzugt 45° relativ zu der zweiten Schwenkposition geschwenkt sein. Insbesondere der letztgenannte Wert stellt dabei einen besonders intuitiv erkennbaren Winkel zur Entnahme dar.

Es ist denkbar, dass in einer zweiten Rotationsposition der Manschette und/oder des Bolzens relativ zu dem schwenkbaren Träger die Manschette und/oder ein Übergangsabschnitt zwischen dem ersten Kanal und der Öffnung ein Hindurchführen des Bolzens durch den ersten Kanal blockiert. Durch das Blockieren des Hindurchführens des Bolzens durch den ersten Kanal kann die Verriegelung des schwenkbaren Trägers an dem Bolzen gewährleistet werden.

In einer Variante ist die Manschette in der zweiten Rotationsposition angeordnet, wenn der schwenkbare Träger in der zweiten Schwenkposition angeordnet ist.

Es ist vorteilhaft, wenn ein Führen der Manschette durch den ersten Kanal in der ersten Rotationsposition blockiert ist. Dies kann einerseits verhindern, dass die Manschette bei der Entnahme des schwenkbaren Trägers auf dem Bolzen verbleibt. Andererseits kann dadurch ein unabsichtliches Herausfallen der Manschette aus dem entnommenen Träger verhindert werden. Letzteres könnte dazu führen, dass die Manschette in schwer zugängliche Bereiche der Transportvorrichtung fällt und so den Reinigungsprozess verzögert.

Besonders günstig ist es, wenn die Manschette in einer dritten Rotationsposition der Manschette relativ zu dem schwenkbaren Träger durch den ersten Kanal hindurch führbar ist. Dadurch kann ein Einsetzen und Herausnehmen der Manschette aus der Öffnung ermöglicht werden. Vorzugsweise ist das Herausnehmen ausschließlich in einer Rotationsposition, z. B. der vorgenannten dritten Rotationsposition, möglich, um ein unkontrolliertes Herausfallen der Manschette aus der Öffnung aus den oben genannten Gründen zu verhindern.

In einer weiteren Variante kann der Bolzen eine ebene Führungsfläche aufweisen, wobei der Bolzen und der erste Kanal derart dimensioniert sind, dass der Bolzen nur dann durch den ersten Kanal hindurch führbar ist, wenn der erste Kanal und die ebene Führungsfläche parallel zueinander ausgerichtet sind.

In einer weiteren Variante kann der Bolzen eine ebene Führungsfläche aufweisen, wobei der Bolzen und der zweite Kanal derart dimensioniert sind, dass der Bolzen nur dann durch den zweiten Kanal hindurchführbar ist, wenn der zweite Kanal und die ebene Führungsfläche parallel zueinander ausgerichtet sind.

Durch eine gemäß den zwei vorangehenden Absätzen vorgesehene Führungsfläche kann eine Entnahmeposition des schwenkbaren Trägers definiert sein.

Besonders vorteilhaft ist es, wenn der Werkstoff, aus dem die Manschette gefertigt ist, ein Polymermaterial umfasst. Dadurch kann die Reibung zwischen dem Träger und dem Bolzen beim Schwenken reduziert werden. Dies kann insbesondere dann vorteilhaft sein, wenn sowohl der Bolzen als auch der Träger aus Metall hergestellt sind.

Die Erfindung bezieht sich auch auf eine Verpackungsmaschine nach Anspruch 13, die eine erfindungsgemäße Transportvorrichtung umfasst. Eine solche Verpackungsmaschine umfasst eine Folienfördereinrichtung zum beidseitigen Halten einer Unterfolie und zum Transportieren der Unterfolie entlang einer Produktionsrichtung der Verpackungsmaschine, wobei die Unterfolie in einem ersten Abschnitt der Verpackungsmaschine mit einem ersten Abstand von einer Aufstellfläche für die Verpackungsmaschine und in einem zweiten Abschnitt der Verpackungsmaschine mit einem zweiten Abstand von der Aufstellfläche verläuft, wobei der zweite Abschnitt stromabwärts des ersten Abschnitts vorgesehen ist und der zweite Abstand größer ist als der erste Abstand. Die Verpackungsmaschine umfasst des Weiteren eine erfindungsgemäße Transportvorrichtung, die in dem ersten Abschnitt der Verpackungsmaschine oberhalb der Unterfolie verläuft.

Die Produktionsrichtung kann dabei als die Richtung verstanden werden, in der die Unterfolie von einer Bearbeitungsstation der Verpackungsmaschine zu der darauffolgenden sowie durch die Verarbeitungsstationen hindurch transportiert wird. Eine Verarbeitungsstation, die ein und denselben Folienabschnitt später bearbeitet als eine vorhergehende Verarbeitungsstation, wird im Folgenden als stromabwärts dieser vorhergehenden Verarbeitungsstation angeordnet bezeichnet. Als Folienfördereinrichtung können z. B. eine oder mehrere Klammerketten vorgesehen sein.

Dadurch, dass die Unterfolie in unterschiedlichen Abschnitten mit unterschiedlichen Abständen zu der Aufstellfläche der Verpackungsmaschine verläuft, kann das Gefälle des Produkteinlegebands reduziert werden, was insbesondere bei zum Kippen oder Fließen neigenden Produkten von Vorteil sein kann.

Die Erfindung bezieht sich auf eine Transportvorrichtung nach Anspruch 1 und eine Verpackungsmaschine nach Anspruch 13.

Im Folgenden werden vorteilhafte Ausführungsbeispiele anhand von Zeichnungen näher erläutert.
- Figur 1: zeigt eine schematische Seitenansicht einer erfindungsgemäßen Verpackungsmaschine.
- Figur 2: zeigt eine perspektivische Ansicht eines Trägers, einer Manschette sowie eines an einer Befestigungskomponente befestigten Bolzens.
- Figur 3: zeigt eine perspektivische Ansicht des Trägers, der Manschette sowie des an der Befestigungskomponente befestigten Bolzens, wobei die Manschette in eine Öffnung des Trägers eingesetzt ist.
- Figur 4A: zeigt eine perspektivische Ansicht des Trägers, der Manschette sowie des an der Befestigungskomponente befestigten Bolzens, wobei der Träger mit der eingesetzten Manschette auf den Bolzen aufgeschoben und in einer ersten Schwenkposition angeordnet ist.
- Figur 4B: zeigt eine perspektivische Ansicht des Trägers, der Manschette sowie des an der Befestigungskomponente befestigten Bolzens, wobei der Träger mit der eingesetzten Manschette auf den Bolzen aufgeschoben und in einer zweiten Schwenkposition angeordnet ist.
- Figur 5: zeigt eine Schnittansicht der Manschette in einer in Figur 2 durch die Linie V-V angedeuteten Perspektive.
- Figur 6A: zeigt eine Figur 5 ähnelnde Schnittansicht, jedoch in dem in Figur 4A dargestellten Zustand.
- Figur 6B: zeigt eine Figur 6A ähnelnde Schnittansicht, jedoch in dem in Figur 4B dargestellten Zustand.
- Figur 7A: zeigt eine schematische Schnittansicht, die ein weiteres Ausführungsbeispiel auf ähnliche Weise veranschaulicht wie Figur 6A. Der Bolzen ist jedoch beim Hindurchführen durch die Kanäle gezeigt.
- Figur 7B: zeigt eine schematische Schnittansicht, die ein weiteres Ausführungsbeispiel auf ähnliche Weise veranschaulicht wie Figur 6B.

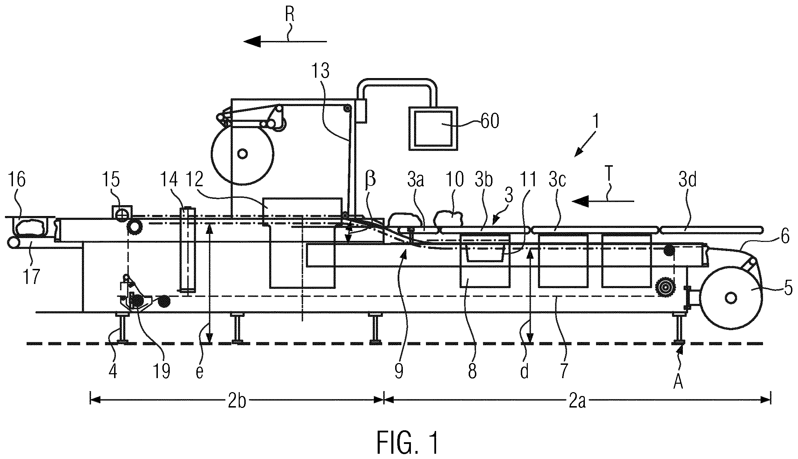

Fig. 1 zeigt eine schematische Seitenansicht einer Verpackungsmaschine 1, die, wie im vorliegenden Beispiel, als taktweise arbeitende Tiefziehverpackungsmaschine ausgeführt sein kann. Sie Z umfasst eine Folienfördereinrichtung 7 und eine Transportvorrichtung, die als Bandförderer 3 ausgeführt ist, der zu verpackende Produkte anliefert, beispielsweise von einer Schneidvorrichtung (nicht gezeigt). Die Verpackungsmaschine 1 kann ein Maschinengestell 4 umfassen, das durch eine Aufstellfläche A gestützt wird. Am in der Fig. 1 rechts gezeigten Anfang der Verpackungsmaschine 1 kann eine Abrollvorrichtung 5 für eine Unterfolie 6 vorgesehen sein. Die Unterfolie 6 kann durch die Folienfördereinrichtung, z. B. durch zwei seitlich der Unterfolie 6 angeordnete Klammerketten 7, entlang einer Produktionsrichtung R transportiert werden. Dabei kann die Unterfolie 6 verschiedene Verarbeitungsstationen durchlaufen.

Die Unterfolie 6 verläuft in einem ersten Abschnitt 2a der Verpackungsmaschine mit einem ersten Abstand d von der Aufstellfläche A und in einem zweiten Abschnitt 2b der Verpackungsmaschine 1 mit einem zweiten Abstand e von der Aufstellfläche A. Dabei ist der zweite Abschnitt 2b stromabwärts des ersten Abschnitts 2a vorgesehen. Der zweite Abstand e ist größer als der erste Abstand d.

Eine der Verarbeitungsstationen kann eine Formstation 8 sein, die zum Formen von Mulden 11 in die Unterfolie 6, z. B. durch Tiefzeihen, konfiguriert sein kann. Im weiteren Produktionsverlauf können eine Einlegestrecke 9, eine Siegelstation 12 sowie eine erste Schneidstation 14 und eine zweite Schneidstation 15 folgen. Es können eine oder mehrere der genannten Stationen vorhanden sein. Des Weiteren können im vorliegenden Beispiel separat gezeigte Stationen in einer Station kombiniert werden, z. B können die erste und die zweite Schneidstation 14, 15 in einer einzelnen Station kombiniert sein, beispielsweise in einer Komplettschnittstation.

Die Einlegestrecke 9 kann an dem Übergang zwischen dem ersten und dem zweiten Abschnitt 2a, 2b der Verpackungsmaschine 1 vorgesehen sein. Sie kann schräg bzw. gegenüber einer Horizontalen in einem Winkel β geneigt sein. Die Einlegestrecke kann zum Einlegen eines Produkts 10 in die geformten Mulden 11 konfiguriert sein. Sie ist daher im vorliegenden Beispiel stromabwärts der Formstation angeordnet.

Der in Fig. 1 gezeigte Bandförderer 3 kann zum Transport von Lebensmittelprodukten 10 entlang einer Transportrichtung T konfiguriert sein. Die Transportrichtung T kann zumindest abschnittsweise parallel zu der Produktionsrichtung R verlaufen. Der Bandförderer 3 ist gemäß der Fig. 1 als Zuführeinrichtung der Verpackungsmaschine 1 ausgebildet, kann jedoch auch als Zuführeinrichtung anderer Verpackungsmaschinentypen zum Einsatz kommen, beispielsweise als Zuführsystem für eine Kammerbandmaschine oder einen Traysealer. Er kann z. B. zumindest teilweise in dem ersten Abschnitt 2a und insbesondere oberhalb der Unterfolie 6 verlaufen.

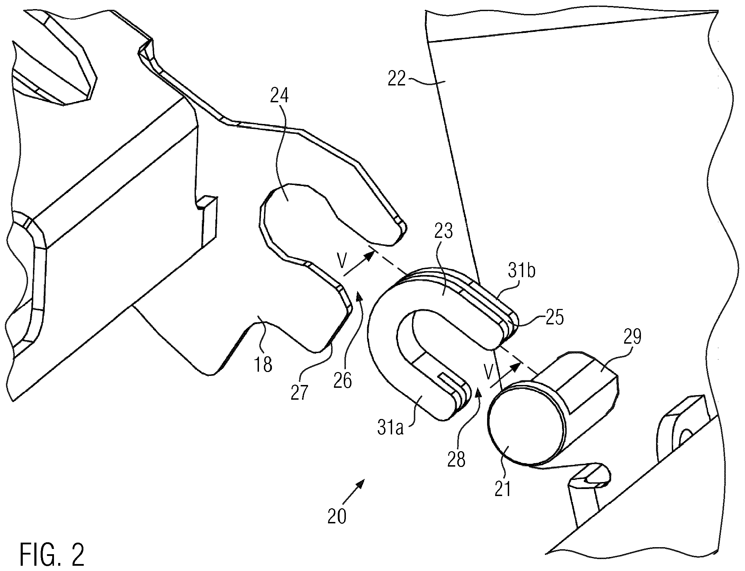

Der Bandförderer 3 ist vorzugsweise als segmentiertes Zuführband ausgebildet, d. h. er kann mehrere Förderbänder 3a, 3b, 3c, 3d umfassen. Bei einem davon kann es sich um ein Produkteinlegeband 3a handeln. Dieses kann das am weitesten stromabwärts angeordnete Förderband des Bandförderers 3 sein. Wie im vorliegenden Beispiel dargestellt, kann das Produkteinlegeband dazu eingerichtet sein, Produkte 10 in die geformten Mulden 11 einzulegen. Dadurch, dass die Unterfolie 6 in dem ersten Abschnitt 2a mit dem ersten Abstand d, der geringer ist als der zweite Abstand e, von der Aufstellfläche A verläuft, kann das Gefälle des Produkteinlegebands 3a reduziert werden. Das Produkteinlegeband 3a wird durch einen schwenkbaren Träger 18 (s. Figur 2) geführt. Auch die übrigen Förderbänder 3b, 3c, 3d werden jeweils durch schwenkbare Träger geführt. Im Folgenden wird beispielhaft das Produkteinlegeband 3a und dessen Träger 18 beschrieben. Diese Erläuterungen sind jedoch auch auf die übrigen Förderbänder 3b, 3c, 3d sowie deren Träger übertragbar.

Die Siegelstation 12 kann zum Verschließen der mit Produkt 10 gefüllten Mulden 11 mit einer Deckelfolie 13 konfiguriert sein. Die erste Schneidstation 14 kann, wie im vorliegenden Beispiel, als Querschneidstation ausgeführt sein. Die zweite Schneidstation 15, die in der beschriebenen Verpackungsmaschine 1 beispielhaft stromabwärts der ersten Schneidstation 14 angeordnet ist, kann als Längsschneidstation ausgeführt sein. Durch die von den Schneidstationen 14, 15 durchgeführten Schnitte können vereinzelte Verpackungen 16 erzeugt werden. Über ein Abführband 17 können die vereinzelten Verpackungen 16 aus der Verpackungsmaschine 1 heraustransportiert werden.

Die Verpackungsmaschine 1 kann eine Steuerung 60 aufweisen. Diese kann z. B. einen Antrieb 19a, beispielsweise einen Servomotor, der Klammerketten 7 und/oder einen Antrieb (nicht gezeigt) des Produkteinlegebands 3a ansteuern. Dadurch können die Geschwindigkeiten beider Antriebe zueinander synchronisiert und/oder zueinander angepasst werden, um den Einlegevorgang optimal entsprechend dem Produkt 10 und/oder der Mulde 11 ausführen zu können.

In Figur 2 ist ein erfindungsgemäßer Verriegelungsmechanismus 20 dargestellt. Dessen Komponenten sind in Figur 2 zur besseren Übersichtlichkeit in einem demontierten Zustand gezeigt. Der Verriegelungsmechanismus 20 umfasst einen Bolzen 21. Dieser ist fest, insbesondere rotationsfest, mit einer Befestigungskomponente 22 verbunden. Der Verriegelungsmechanismus 20 umfasst des Weiteren eine Manschette 23. Diese ist rotationssicher auf den Bolzen aufschiebbar.

Aus Figur 2 ist außerdem ersichtlich, dass der schwenkbare Träger 18 eine Öffnung 24 aufweist. In dieser Öffnung 24 ist die Manschette 23 drehbar lagerbar.

Dazu kann der Träger 18 in einer an der Manschette 23 vorgesehenen Nut 25 aufnehmbar sein. Der schwenkbare Träger 18 kann darüber hinaus einen ersten Kanal 26 aufweisen. Dieser kann mit der Öffnung 24 verbunden und derart dimensioniert sein, dass der Bolzen 21 durch ihn hindurch zu der Öffnung hin führbar ist. Der erste Kanal 26 kann zwischen der Öffnung 24 und einer Randfläche 27 des Trägers 18 verlaufen. Dies kann ein Einschieben des Bolzens 21 und/oder der Manschette 23 von außen in einer Richtung erlauben, die senkrecht zu der Randfläche 27 verläuft.

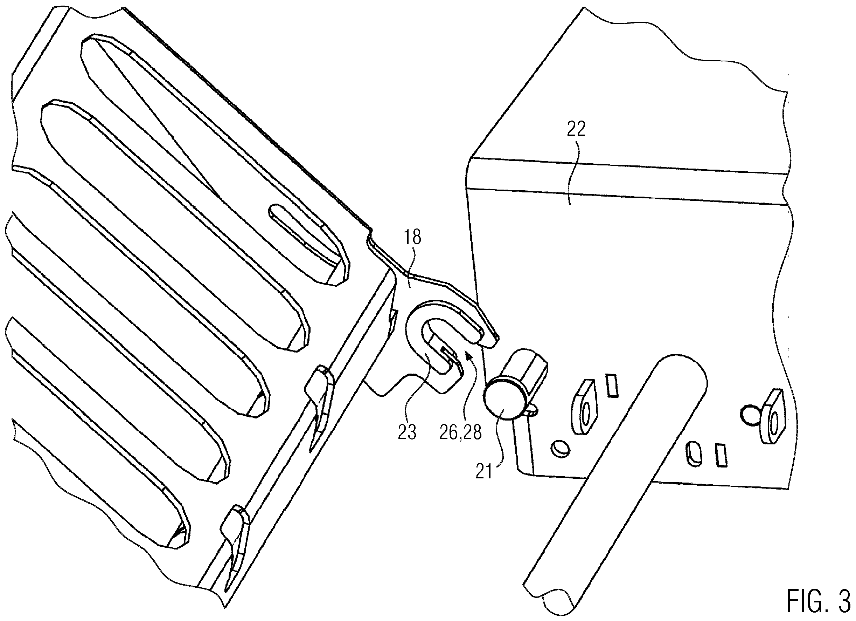

Die Manschette kann einen zweiten Kanal 28 aufweisen. Auch der zweite Kanal 28 kann für ein Hindurchführen des Bolzens 21 durch ihn hindurch dimensioniert sein. Des Weiteren ist in Figur 2 eine ebene Führungsfläche 29 zu erkennen, die an dem Bolzen 21 vorgesehen sein kann. Deren Funktion wird im Folgenden noch näher erläutert werden. In Figur 3 ist eine ähnliche Ansicht wie in Figur 2 dargestellt. Hier ist jedoch die Manschette 23 in der Öffnung 24 drehbar gelagert. In der Darstellung sind zudem der erste Kanal 26 und der zweite Kanal 28 deckungsgleich zueinander ausgerichtet.

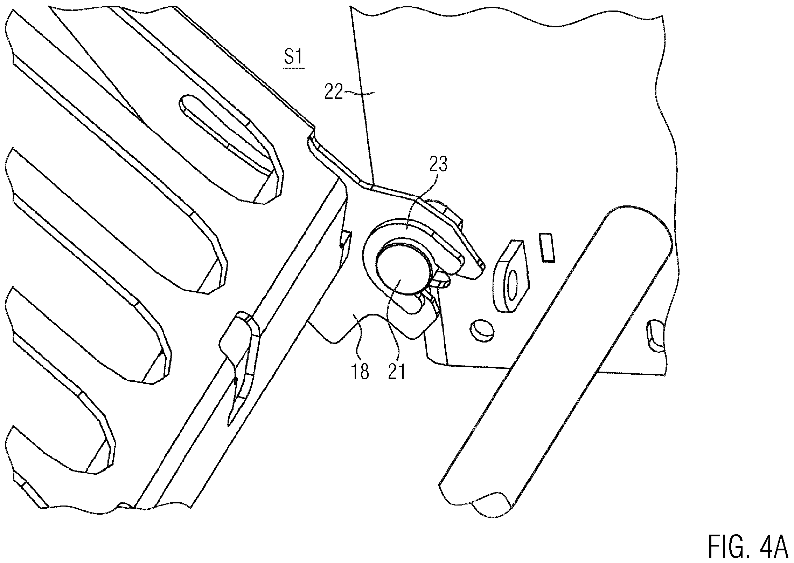

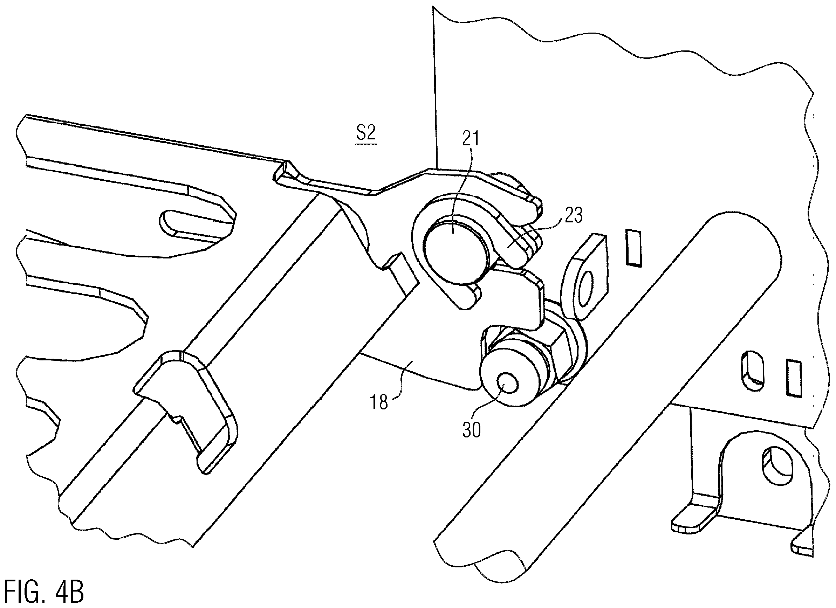

Figur 4A zeigt eine ähnliche Ansicht wie die Figuren 2 und 3. Hier ist jedoch die Manschette 23 mit dem Träger 18 auf den Bolzen 21 aufgeschoben. Der Träger 18 ist dabei in einer ersten Schwenkposition S1 angeordnet. Da es in dieser ersten Schwenkposition S1 möglich ist, den Träger auf den Bolzen 21 aufzuschieben oder ihn von dem Bolzen 21 zu entfernen, kann die beispielhaft dargestellte erste Schwenkposition S1 als Entnahmeposition des Trägers 18 bezeichnet werden. Figur 4B zeigt eine ähnliche Ansicht wie Figur 4A. Hier ist jedoch der Träger 18 in einer zweiten Schwenkposition S2 angeordnet. Zum Halten des Trägers 18 in der zweiten Schwenkposition kann ein Anschlag 30 vorgesehen sein.

Es ist des Weiteren zu erkennen, dass die Manschette 23 nicht gemeinsam mit dem Träger 18 geschwenkt wurde. Vielmehr hat sie eine andere Rotationsposition gegenüber dem Träger 18 eingenommen. Die Positionierung der Manschette 23 relativ zu dem Bolzen 21 hat sich dabei nicht verändert. Der Verriegelungsmechanismus 20 befindet sich dadurch in einem verriegelten Zustand, der im Folgenden anhand von Schnittansichten noch näher erläutert wird.

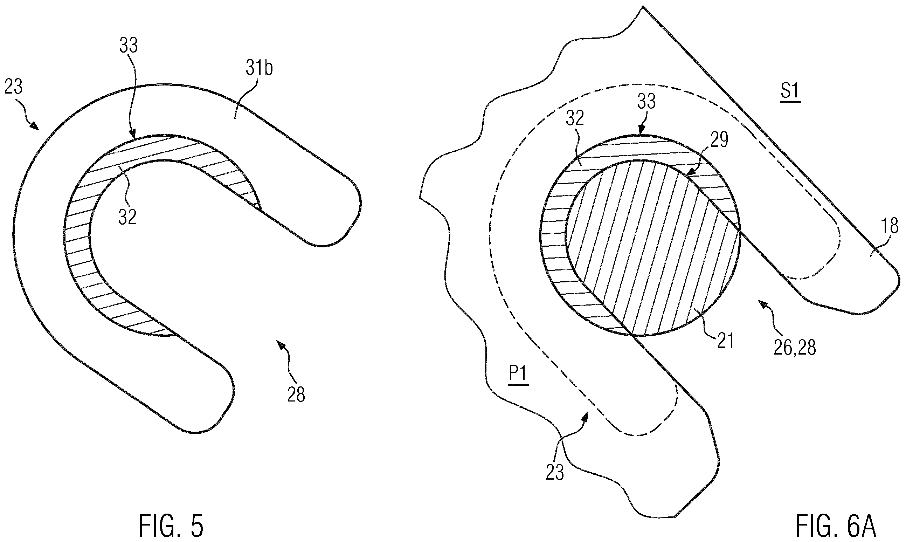

In Figur 5 ist eine Schnittansicht der Manschette 23 dargestellt. Die Perspektive ist in Figur 2 durch die Linie V-V angedeutet. Dabei verläuft die Schnittebene durch die Nut 25. Durch diese Ansicht wird deutlich, dass gemäß dem vorliegenden Ausführungsbeispiel die Manschette 23 zwei vorzugsweise kongruente Plattenabschnitte 31a, 31b umfassen kann. Diese können durch einen Verbindungsabschnitt 32 verbunden und voneinander beabstandet sein. Durch die Beabstandung der Plattenabschnitte 31a, 31b kann die Nut 25 gebildet werden. Der Verbindungsabschnitt 32 kann eine Lagerfläche 33 aufweisen. Diese kann im in den Träger 18 eingesetzten Zustand der Manschette 23 mit einer Randfläche der Öffnung 24 in Eingriff sein.

In Figur 6A ist eine Figur 5 ähnliche Schnittansicht dargestellt. Hier sind jedoch auch der Bolzen 21 und der schwenkbare Träger 18 zu erkennen. Der Träger 18 ist in der ersten Schwenkposition S1 angeordnet, die auch in Figur 4A dargestellt ist. Die Manschette 23 ist in einer ersten Rotationsposition P1 relativ zu dem Träger 18 angeordnet. In der ersten Rotationsposition P1 können der erste Kanal 26 und der zweite Kanal 28 deckungsgleich zueinander ausgerichtet sein. Dadurch kann ein Hindurchführen des Bolzens 21 durch beide Kanäle 26, 28 gleichzeitig erfolgen.

Durch die bereits mit Bezug auf Figur 2 erwähnte ebene Führungsfläche 29 kann eine Orientierung festgelegt werden, in der der Bolzen 21 relativ zu den Kanälen 26, 28 angeordnet sein muss, damit ein Hindurchführen möglich ist. Im vorliegenden Ausführungsbeispiel kann ein Hindurchführen des Bolzens 21 durch die Kanäle 26, 28 nur dann erfolgen, wenn die ebene Führungsfläche 29 parallel zu den Kanälen 26, 28 ausgerichtet ist. Wie in Figur 6A dargestellt, kann es vorgesehen sein, dass die Manschette 23 und/oder der Bolzen 21 in der ersten Rotationsposition P1 relativ zu dem schwenkbaren Träger 18 angeordnet sind, wenn der schwenkbare Träger 18 in der ersten Schwenkposition S1 angeordnet ist.

Ein Fachmann erkennt, dass in der in Figur 6A dargestellten ersten Rotationsposition P1 ein Führen der Manschette 23 durch den ersten Kanal 26 durch die Geometrie des Verbindungsabschnitts 32 blockiert sein kann. Wie bereits erwähnt kann so ein unbeabsichtigtes Herausfallen der Manschette 23 aus der Öffnung 24 verhindert werden.

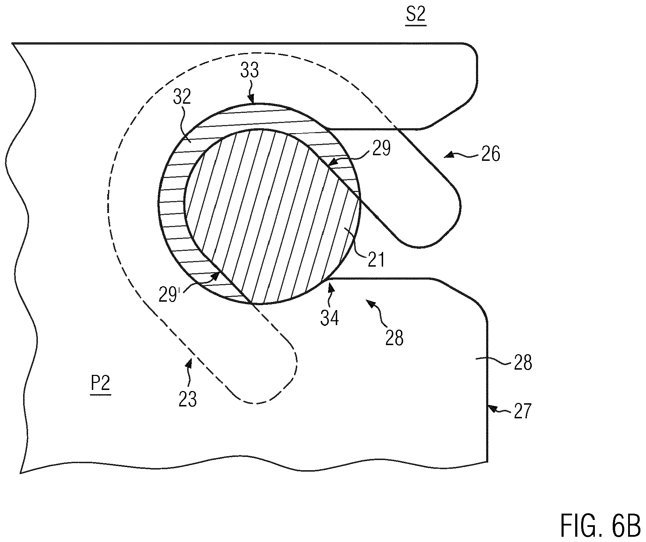

In Figur 6B ist eine ähnliche Ansicht dargestellt wie in Figur 6A. Allerdings ist der schwenkbare Träger 18 in der zweiten Schwenkposition S2, die auch in Figur 4B dargestellt ist, gezeigt. Es ist zu erkennen, dass durch den rotationssicheren Sitz der Manschette 23 auf dem Bolzen 21 die Rotationsposition der Manschette 23 und des Bolzens 21 relativ zu dem Träger 18 verändert wurde. Die beispielhaft dargestellte zweite Rotationsposition wird im Folgenden mit P2 benannt. Durch die Schnittdarstellung wird erkennbar, dass in der zweiten Rotationsposition P2 ein Hindurchführen des Bolzens durch den ersten Kanal 26 zum einen durch die Manschette 23 blockiert sein kann. Zum anderen kann das Hindurchführen durch einen Übergangsabschnitt 34, der zwischen dem ersten Kanal 26 und der Öffnung 24 vorgesehen sein kann, blockiert sein.

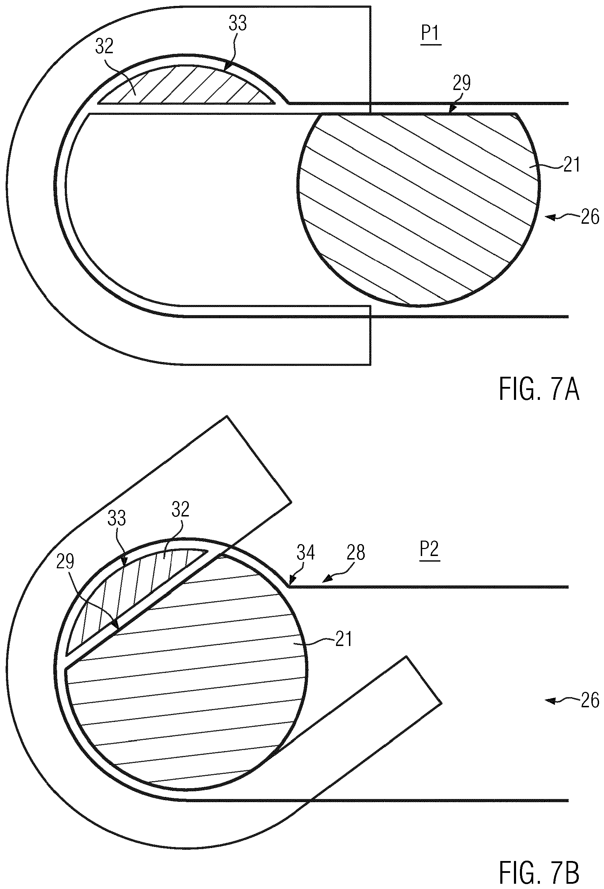

Es sollte klar sein, dass eine Art der Blockade des Hindurchführens ausreichend zum Realisieren der Verriegelungsfunktion des Verriegelungsmechanismus 20 sein kann, auch wenn im vorliegenden Ausführungsbeispiel beide Arten der Blockade dargestellt sind. In dem vorangehend beschriebenen Beispiel weist der Bolzen neben der ebenen Führungsfläche 29 eine zweite Führungsfläche 29' auf. Wie im Folgenden mit Bezug auf die Figuren 7A und 7B erläutert, sind jedoch auch Beispiele mit nur einer an dem Bolzen 21 vorgesehenen ebenen Führungsfläche 29 denkbar.

Die Figuren 7A und 7B zeigen schematische Schnittansichten, die analoge Komponenten zeigen wie die Figuren 6A und 6B. Figur 7A stellt den Bolzen 21 während des Hindurchführens durch die Kanäle 26, 28 dar. In diesem Beispiel weist der Bolzen 21 jedoch nur eine ebene Führungsfläche 29 auf. Aus Figur 7B geht hervor, dass dort das Hindurchführen des Bolzens 21 nur durch den Übergangsabschnitt 34 blockiert wird. Bei einer Rotation in die entgegengesetzte Richtung könnte auch eine Blockierung durch die Manschette 23 erfolgen.

## Patentansprüche

1. Transportvorrichtung (3) mit einem Förderband (3a, 3b, 3c, 3d), das durch einen schwenkbaren Träger (18) geführt wird, wobei eine Bandspannung des Förderbands (3a, 3b, 3c, 3d) niedriger ist, wenn der schwenkbare Träger (18) in einer ersten Schwenkposition (S1) angeordnet ist, als wenn er in einer zweiten Schwenkposition (S2) angeordnet ist,
wobei die Transportvorrichtung (3) des Weiteren einen Verriegelungsmechanismus (20) umfasst, durch den der schwenkbare Träger (18) an einer Befestigungskomponente (22) der Transportvorrichtung (3) schwenkbar befestigt ist, wobei der Verriegelungsmechanismus (20) für eine werkzeuglose Entnahme des schwenkbaren Trägers (18) aus der Transportvorrichtung (3) konfiguriert ist, wobei der Verriegelungsmechanismus (20) einen fest mit der Befestigungskomponente (22) verbundenen Bolzen (21) umfasst,
**dadurch gekennzeichnet, dass** der Verriegelungsmechanismus (20) eine Manschette (23) umfasst, die rotationssicher auf den Bolzen (21) aufschiebbar ist, wobei die Manschette (23) drehbar in einer Öffnung (24) des schwenkbaren Trägers (18) lagerbar ist.

2. Transportvorrichtung nach Anspruch 1, wobei der schwenkbare Träger (18) einen ersten Kanal (26) aufweist, der mit der Öffnung (24) verbunden ist, wobei der erste Kanal (26) für ein Hindurchführen des Bolzens (21) durch ihn hindurch zu der Öffnung (24) dimensioniert ist.

3. Transportvorrichtung nach Anspruch 1 oder 2, wobei die Manschette (23) einen zweiten Kanal (28) aufweist, der für ein Hindurchführen des Bolzens (21) durch ihn hindurch dimensioniert ist.

4. Transportvorrichtung nach Anspruch 3, wobei der erste Kanal (24) und der zweite Kanal (28) in einer ersten Rotationsposition (P1) der Manschette (23) relativ zu dem schwenkbaren Träger (18) deckungsgleich zueinander ausgerichtet sind, wodurch der Bolzen (21) durch beide Kanäle (26, 28) hindurch führbar ist.

5. Transportvorrichtung nach Anspruch 4, wobei die Manschette (23) in der ersten Rotationsposition (P1) angeordnet ist, wenn der schwenkbare Träger (18) in der ersten Schwenkposition (S1) angeordnet ist.

6. Transportvorrichtung nach einem der Ansprüche 2 bis 5, wobei in einer zweiten Rotationsposition (P2) der Manschette (23) relativ zu dem schwenkbaren Träger (18) die Manschette (23) oder ein Übergangsabschnitt (34) zwischen dem ersten Kanal (26) und der Öffnung (24) ein Hindurchführen des Bolzens (21) durch den ersten Kanal (26) blockiert.

7. Transportvorrichtung nach Anspruch 6, wobei die Manschette (23) in der zweiten Rotationsposition (P2) angeordnet ist, wenn der schwenkbare Träger (18) in der zweiten Schwenkposition (S2) angeordnet ist.

8. Transportvorrichtung nach Anspruch 4, wobei ein Führen der Manschette (23) durch den ersten Kanal (26) in der ersten Rotationsposition (P1) blockiert ist.

9. Transportvorrichtung nach Anspruch 2, wobei die Manschette (23) in einer dritten Rotationsposition der Manschette (23) relativ zu dem schwenkbaren Träger (18) durch den ersten Kanal (26) hindurch führbar ist.

10. Transportvorrichtung nach Anspruch 2, wobei der Bolzen (21) eine ebene Führungsfläche (29, 29') aufweist, wobei der Bolzen (21) und der erste Kanal (26) derart dimensioniert sind, dass der Bolzen (21) nur dann durch den ersten Kanal (26) hindurch führbar ist, wenn der erste Kanal (26) und die ebene Führungsfläche (29) parallel zueinander ausgerichtet sind.

11. Transportvorrichtung nach Anspruch 3, wobei der Bolzen (21) eine ebene Führungsfläche (29, 29') aufweist, wobei der Bolzen (21) und der zweite Kanal (28) derart dimensioniert sind, dass der Bolzen (21) nur dann durch den zweiten Kanal (28) hindurch führbar ist, wenn der zweite Kanal (28) und die ebene Führungsfläche (29, 29') parallel zueinander ausgerichtet sind.

12. Transportvorrichtung nach einem der Ansprüche 2 bis 11, wobei der Werkstoff, aus dem die Manschette (23) hergestellt ist, ein Polymermaterial umfasst.

13. Verpackungsmaschine (1), umfassend
eine Folienfördereinrichtung (7) zum beidseitigen Halten einer Unterfolie (6) und zum Transportieren der Unterfolie (6) entlang einer Produktionsrichtung (R) der Verpackungsmaschine (1), wobei die Unterfolie (6) in einem ersten Abschnitt (2a) der Verpackungsmaschine (1) mit einem ersten Abstand (d) von einer Aufstellfläche (A) für die Verpackungsmaschine (1) und in einem zweiten Abschnitt (2b) der Verpackungsmaschine (1) mit einem zweiten Abstand (e) von der Aufstellfläche (A) verläuft, wobei der zweite Abschnitt (2b) stromabwärts des ersten Abschnitts (2a) vorgesehen ist und der zweite Abstand (e) größer ist als der erste Abstand (d), und
eine Transportvorrichtung (3) gemäß einem der vorangehenden Ansprüche, wobei das Förderband (3a, 3b, 3c, 3d) in dem ersten Abschnitt (2a) der Verpackungsmaschine (1) oberhalb der Unterfolie (6) verläuft.

## Claims

1. A transport device (3) comprising a conveyor belt (3a, 3b, 3c, 3d) guided by a pivotable carrier (18), wherein a belt tension of the conveyor belt (3a, 3b, 3c, 3d) is lower when the pivotable carrier (18) is arranged in a first pivot position (S1) than when it is arranged in a second pivot position (S2),
the transport device (3) further comprising a locking mechanism (20) by which the pivotable carrier (18) is pivotally mounted to a mounting component (22) of the transport device (3), the locking mechanism (20) being configured for tool-free removal of the pivotable carrier (18) from the transport device (3), wherein the locking mechanism (20) comprises a bolt (21) fixedly connected to the mounting component (22),
**characterized in that** the locking mechanism (20) comprises a sleeve (23) which can be slid onto the bolt (21) in a rotationally secure manner, wherein the sleeve (23) is rotatably mountable in an opening (24) of the pivotable carrier (18).

2. Transport device according to claim 1, the pivotable carrier (18) having a first channel (26) connected to the opening (24), the first channel (26) being dimensioned for passage of the bolt (21) through it to the opening (24).

3. Transport device according to claim 1 or 2, the sleeve (23) having a second channel (28) dimensioned for passage of the bolt (21) therethrough.

4. Transport device according to claim 3, wherein the first channel (24) and the second channel (28) are aligned congruently with each other in a first rotational position (P1) of the sleeve (23) relative to the pivotable carrier (18), whereby the bolt (21) can be guided through both channels (26, 28).

5. Transport device according to claim 4, wherein the sleeve (23) is arranged in the first rotational position (P1) when the pivotable carrier (18) is arranged in the first pivot position (S1).

6. Transport device according to one of claims 2 to 5, wherein in a second rotational position (P2) of the sleeve (23) relative to the pivotable carrier (18), the sleeve (23) or a transition portion (34) between the first channel (26) and the opening (24) blocks passage of the bolt (21) through the first channel (26).

7. Transport device according to claim 6, wherein the sleeve (23) is arranged in the second rotational position (P2) when the pivotable carrier (18) is arranged in the second pivot position (S2).

8. Transport device according to claim 4, wherein guiding the sleeve (23) through the first channel (26) is blocked in the first rotational position (P1).

9. Transport device according to claim 2, wherein the sleeve (23) can be guided through the first channel (26) in a third rotational position of the sleeve (23) relative to the pivotable carrier (18).

10. Transport device according to claim 2, wherein the bolt (21) has a flat guide surface (29, 29'), wherein the bolt (21) and the first channel (26) are dimensioned such that the bolt (21) can be guided through the first channel (26) only if the first channel (26) and the flat guide surface (29) are aligned parallel to one another.

11. Transport device according to claim 3, wherein the bolt (21) has a flat guide surface (29, 29'), wherein the bolt (21) and the second channel (28) are dimensioned such that the bolt (21) can be guided through the second channel (28) only if the second channel (28) and the flat guide surface (29, 29') are aligned parallel to one another.

12. Transport device according to one of claims 2 to 11, wherein the material from which the sleeve (23) is made comprises a polymeric material.

13. Packaging machine (1) comprising
a film conveying device (7) for holding a bottom film (6) on both sides and for transporting the bottom film (6) along a production direction (R) of the packaging machine (1), wherein the bottom film (6) extends in a first section (2a) of the packaging machine (1) at a first distance (d) from an installation surface (A) for the packaging machine (1) and in a second section (2b) of the packaging machine (1) at a second distance (e) from the installation surface (A), wherein the second section (2b) is provided downstream of the first section (2a) and the second distance (e) is greater than the first distance (d), and
a transport device (3) according to one of the preceding claims, the conveyor belt (3a, 3b, 3c, 3d) extending above the bottom film (6) in the first section (2a) of the packaging machine (1).

## Revendications

1. Dispositif de transport (3) comprenant une bande transporteuse (3a, 3b, 3c, 3d) qui est guidée grâce à un support pivotant (18), dans lequel une tension de bande de la bande transporteuse (3a, 3b, 3c, 3d) est plus faible, lorsque le support pivotant (18) est agencé dans une première position de pivotement (S1), que lorsqu'il est agencé dans une deuxième position de pivotement (S2),
dans lequel le dispositif de transport (3) comprend en outre un mécanisme de verrouillage (20) grâce auquel le support pivotant (18) est fixé de manière pivotante à un composant de fixation (22) du dispositif de transport (3), dans lequel le mécanisme de verrouillage (20) est configuré pour un retrait sans outil du support pivotant (18) hors du dispositif de transport (3), dans lequel le mécanisme de verrouillage (20) comprend un boulon (21) relié de manière fixe au composant de fixation (22),
**caractérisé en ce que** le mécanisme de verrouillage (20) comprend un manchon (23) qui peut être poussé sur le boulon (21) de manière à être bloqué en rotation, dans lequel le manchon (23) peut être installé dans une ouverture (24) du support pivotant (18) de manière à pouvoir tourner.

2. Dispositif de transport selon la revendication 1, dans lequel le support pivotant (18) présente un premier canal (26) qui est relié à l'ouverture (24), dans lequel le premier canal (26) est dimensionné pour être traversé par le boulon (21) jusqu'à l'ouverture (24).

3. Dispositif de transport selon la revendication 1 ou 2, dans lequel le manchon (23) présente un second canal (28) qui est dimensionné pour être traversé par le boulon (21).

4. Dispositif de transport selon la revendication 3, dans lequel le premier canal (24) et le second canal (28) sont alignés l'un par rapport à l'autre de manière coïncidente dans une première position de rotation (P1) du manchon (23) par rapport au support pivotant (18), ce qui permet au boulon (21) d'être guidé à travers les deux canaux (26, 28).

5. Dispositif de transport selon la revendication 4, dans lequel le manchon (23) est agencé dans la première position de rotation (P1) lorsque le support pivotant (18) est agencé dans la première position de pivotement (S1).

6. Dispositif de transport selon l'une quelconque des revendications 2 à 5, dans lequel, dans une deuxième position de rotation (P2) du manchon (23) par rapport au support pivotant (18), le manchon (23), ou une section de transition (34) située entre le premier canal (26) et l'ouverture (24), empêche le boulon (21) de traverser le premier canal (26).

7. Dispositif de transport selon la revendication 6, dans lequel le manchon (23) est agencé dans la deuxième position de rotation (P2) lorsque le support pivotant (18) est agencé dans la deuxième position de pivotement (S2).

8. Dispositif de transport selon la revendication 4, dans lequel le guidage du manchon (23) à travers le premier canal (26) est empêché dans la première position de rotation (P1).

9. Dispositif de transport selon la revendication 2, dans lequel le manchon (23) peut être guidé à travers le premier canal (26) dans une troisième position de rotation du manchon (23) par rapport au support pivotant (18).

10. Dispositif de transport selon la revendication 2, dans lequel le boulon (21) présente une surface de guidage plane (29, 29'), dans lequel le boulon (21) et le premier canal (26) sont dimensionnés de telle manière que le boulon (21) ne peut être guidé à travers le premier canal (26) que lorsque le premier canal (26) et la surface de guidage plane (29) sont alignés parallèlement l'un à l'autre.

11. Dispositif de transport selon la revendication 3, dans lequel le boulon (21) présente une surface de guidage plane (29, 29'), dans lequel le boulon (21) et le second canal (28) sont dimensionnés de telle manière que le boulon (21) ne peut être guidé à travers le second canal (28) que lorsque le second canal (28) et la surface de guidage plane (29, 29') sont alignés parallèlement l'un à l'autre.

12. Dispositif de transport selon l'une quelconque des revendications 2 à 11, dans lequel le matériau à partir duquel est fabriqué le manchon (23) comprend un matériau polymère.

13. Machine d'emballage (1), comprenant
un dispositif de transport de film (7) permettant de maintenir par les deux côtés un film inférieur (6) et permettant de transporter le film inférieur (6) le long d'une direction de production (R) de la machine d'emballage (1), dans lequel, dans une première section (2a) de la machine d'emballage (1), le film inférieur (6) s'étend à une première distance (d) d'une surface de mise en place (A) pour la machine d'emballage (1) et, dans une seconde section (2b) de la machine d'emballage (1), s'étend à une seconde distance (e) de la surface de mise en place (A), dans lequel la seconde section (2b) est prévue en aval de la première section (2a) et la seconde distance (e) est supérieure à la première distance (d), et
un dispositif de transport (3) selon l'une quelconque des revendications précédentes, dans lequel la bande transporteuse (3a, 3b, 3c, 3d) s'étend dans la première section (2a) de la machine d'emballage (1) au-dessus du film inférieur (6).
